# EUROPEAN PATENT APPLICATION

(11) **EP 3 046 090 A1**
(43) Date of publication of application: **20.07.2016**
(21) Application number: 15203112.6
(22) Date of filing: 30.12.2015
(51) Int. Cl.: G08G 1/0967, G01C 21/36, G06F 17/00

(54) **AN APPARATUS, A METHOD, AND A COMPUTER PROGRAM FOR ASSISTING A DRIVER**

(30) Priority: 15.01.2015 JP 2015006020
(71) Applicant: HONDA MOTOR CO., LTD., Tokyo, 107-8556 (JP)
(72) Inventor: CHIBA, Takeshi, Saitama, 351-0193 (JP); SATOMURA, Masashi, Saitama, 351-0193 (JP)
(74) Representative: Prechtel, Jörg

(57) **Abstract**

A common driver assistance apparatus is provided that is capable of processing communications contents of various inter-car communications and road-car communications in various regions. The driver assistance apparatus receives data of a first regional scheme or of a second regional scheme, determines if an application to be executed fits the scheme of the received data, and transform the data if the determination is negative so that the application fits. The first regional scheme may be American scheme and the second regional scheme may be European scheme.

## Description

### Field of the Invention

The present invention relates to relates to an apparatus, method, and computer program for assisting a driver, and more specifically to such apparatus, method and computer program that utilize inter-car communications and/or communications between road facilities and cars (road-car communications).

### Background Art

Driver assistance systems have been developed in Europe (EU) and America (US), which utilize inter-car communications and road-car communications. EU and the US have been respectively developing original standards with different communications schemes and different data formats.

EU utilizes two types of packet formats comprising cooperative awareness message (CAM) that stores information on a driver's own car and is periodically transmitted, and decentralized environmental notification message (DENM) that is transmitted when a risky event is detected.

On the other hand, US utilizes basic safety message (BSM) that stores information on a driver's own car and is periodically transmitted. There are no standards corresponding to DENM in EU for transmitting message when a risky event is detected.

A driver assistance apparatus that is to be solely used in EU or in the US needs be designed separately, causing extra burdens on managing and manufacturing. It would be advantageous if a common apparatus may be used in EU and in the US.

Japanese Patent Application Publication No. 2008-15851 discloses a communications apparatus for converting between different data formats, wherein data acquired from inter-car communications is transformed into a compatible data format called VICS (trademark) for utilization.

However, no description is included as to what conversion should be made for use in a secured driver assistance system utilizing specific inter-car communications.

### Prior Art Document

Patent Document 1: JP2008-15851 A

### Summary of the invention

In view of the above mentioned state of the art, there is a need for a common driver assistance apparatus that is capable of processing communications contents of various inter-car communications and road-car communications in various regions.

The driver assistance apparatus of the present invention supports driving of a vehicle and is configured to receive at least one of data of a first regional scheme and data of a second regional scheme, to determine if an application to be executed fits the scheme of the received data, to transform the data if the determination is negative so that the application may fit, and to execute the application.

According to one aspect of the present invention, the first regional scheme is an American scheme and the second regional scheme is a European scheme. When data comprising BSM based on data of the American scheme attached with event information is received, for execution of an application designed for data of the European scheme the event information is transformed into DENM and BSM is transformed into CAM

According to another aspect of the present invention, the first regional scheme is an American scheme and the second regional scheme is a European scheme. When DENM based on the European scheme is received, for execution of an application designed for data of the American scheme DENM is transformed into event information.

A driver assistance apparatus of the present invention is an apparatus for assisting driving of a vehicle and provided with an application capable of transmitting either one of data of the first regional scheme as well as data of the second regional scheme, and is configured to produce either one of data of the first regional scheme and data of the second regional scheme and to transmit the produced data.

According to another aspect of the invention, the apparatus is configured to select one of the first regional scheme and the second regional scheme for transmission according to the present location.

According to further another aspect of the invention, the apparatus is configured to select one of the first regional scheme and the second regional scheme for transmission according to ratio between the schemes used in respective received data.

A method for assisting a driver of the present invention is a method performed by the driver assistance apparatus and comprises the steps of receiving at least one of data of the first regional scheme and data of the second regional scheme, determining if the application to be executed fits the scheme of the received data, if the determination is negative, transforming the data so that the application fits the data, and executing the application.

According to another aspect of the invention, a method for assisting a driver is a method performed by the driver assistance apparatus provided with the function of transmitting either one of data of the first regional scheme and data of the second regional scheme, the method comprising the steps of producing either one of data of the first regional scheme and data of the second regional scheme, and transmitting the produced data.

A program for assisting a driver of the present invention runs on a computer included in a driver assistance apparatus and makes the computer perform the steps of receiving at least one of data out of data of the first regional scheme and data of the second regional scheme, determining if the application to be executed fits the received data, if the determination is negative, transforming the data so that the application fits the data, and executing the application.

According to another aspect of the invention, a driver assistance program of the present invention runs on a computer included in a driver assistance apparatus and makes the computer perform the steps of making the computer perform the function of transmitting any one of data of the first regional scheme and data of the second regional scheme, producing at least one of data of the first regional scheme and data of the second regional scheme, and transmitting the produced data.

According to the driver assistance apparatus of the present invention, even if different schemes are employed in different regions for communications relating to driver assistance, a common platform may process the communications.

### Brief Description of the Drawings

Fig. 1 is a block diagram illustrating a driver assistance system incorporating a driver assistance apparatus according to one embodiment of the present invention.
Fig. 2 is a block diagram illustrating software architecture of an ITS processing apparatus.
Fig. 3 is a flow chart illustrating operational flow of a transmission side of the ITS processing apparatus.
Fig. 4 illustrates a structure of data fields to be used in BSM transmission by the driver assistance apparatus according to one embodiment of the present invention.
Fig. 5 is a flow chart illustrating operational flow at a receiver side of the ITS processing apparatus.

### Detailed description

Inter-car communications and road-car communications are technologies for supporting safe driving. The inter-car communications is communications between cars. The road-car communications is communications between roadside facilities provided around a road and a vehicle. Road side facilities provided with one or more sensors and cameras detects cars and people on a pedestrian crossing and transmits relevant information to cars in the surroundings. First, the standards that are being planned in Europe (EU) and America (US) respectively relative to inter-car communications and road-car communications will be described.

CAM (Cooperative Awareness Message: defined in ETSI EN 302 637-2) that is data for driver assistance according to EU regional scheme will be described. In CAM communications, information such as location of a vehicle, direction, and vehicle speed is periodically transmitted, for example every 100 millisecond. A vehicle that receives CAM from a transmitting vehicle determines risk of collision utilizing vehicle location and vehicle speed of the transmitting vehicle.

Now, DENM (Decentralized Environmental Notification Message: defined in ETSI EN 3020637-3) will be described. In DENM communications, information such as category and location of an event is transmitted when an event occurs. DENM differs from CAM in that it is an event transmission. A vehicle that receives DENM, notifies the driver by means of images or sound about hazard, harsh (sudden) braking included in the received DENM.

BSM (Basic Safety Message: defined in SAE J2735) is data for assisting driving according to US regional scheme. BSM is similar to CAM. In BSM communications, location, direction, speed of a vehicle is transmitted periodically, for example every 100 millisecond. A vehicle that receives BSM determines risk of collision utilizing the location, speed, etc. of a transmitting vehicle. Communications of information corresponding to DENM in EU has not been not been proposed in the US.

In order to accommodate EU standards and US standards in one driver assistance apparatus, an embodiment of the present invention proposes to achieve functions of DENM in BSM. In one embodiment, event information to be included in DENM of EU is communicated using BSM in US. BSM is a periodic communications while DENM is communications performed when an event occurs. When communications rate of the periodic communications is high such as every 100 millisecond, delay of communications may be negligibly small. Thus, event information is added to BSM. Now, referring to the attached drawings, an embodiment of the present invention will be described.

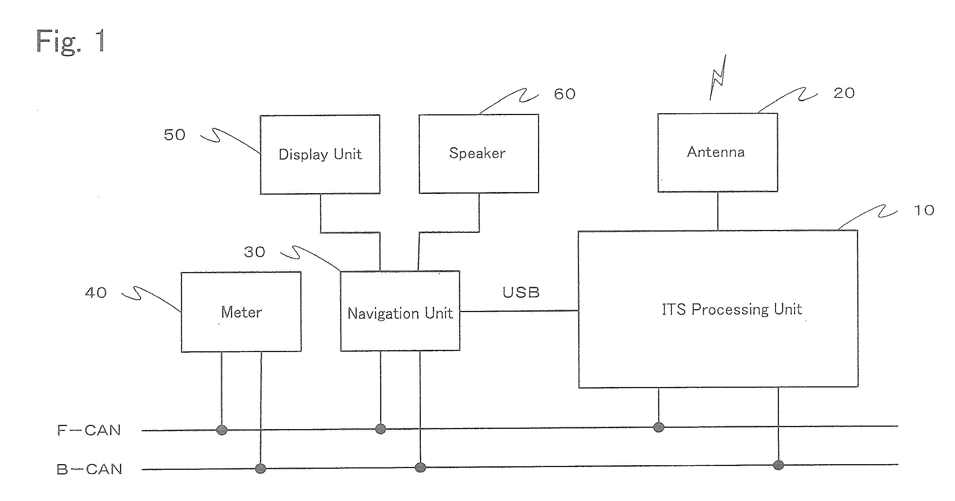

Fig. 1 is a block diagram illustrating a driver assistance system incorporating a driver assistance apparatus according to one embodiment of the present invention. Driver assistance system 1 comprises ITS (Intelligent Transport Systems: Sophisticated Transport System) processing unit 10, antenna 20, navigation unit 30, METER 40, display unit 50, and speaker 60.

ITS processing unit 10 processes inter-car communications and road-car communications and performs processes for driver assistance. ITS processing unit 10 has a function as an application unit and as a CCU (Communication Control Unit). Via F-CAN (Control Area Network, on-board network) and B-CAN (another on-board network), ITS processing unit acquires various data on its own vehicle from ECU (Engine Control Unit, Electronic Control Unit) and performs transmission process for inter-car communications for driver assistance.

ITS processing unit 10 also performs receiving process for inter-car communications and road-car communications for driver assistance. ITS processing unit 10 transfers results of receiving process to navigation unit 30 and METER 40 via F-CAN or B-CAN. USB (Universal Serial Bus) may be used for communications with navigation unit 30. Technologies such as DSRC (Dedicated Short Range Communication) and Wi-Fi may be used for inter-car communications and road-car communications.

ITS processing unit 10 is essentially a computer having a processor such as CPU (Central Processing Unit), and memory such as ROM (Read Only Memory) storing computer programs and RAM (Random Access Memory) for temporarily storing data. ITS processing unit achieves various functions by executing computer programs. Composition of software which is achieved by execution of computer programs will be described later. Various units of the software of ITS processing unit 10 may be composed of dedicated hardware including electric components.

Antenna 20 is for communications with outside of the car via wireless network. Antenna 20 may be an integrated loop antenna for achieving inter-car communications and road-car communications by means of DSRC as well as telephone, GPS (Global Positioning System), AM, FM, and XM (satellite digital radio station). Navigation unit 30 is a electronic device having functions of identifying a present position of a driver's own car and guiding routes to a destination. Navigation unit 30 outputs display information such as map information to display unit 50 and outputs sound information to speaker 60.

Display unit 50 displays graphics such as maps and text message, and may be a liquid crystal display (LCD) or an organic electro luminescence (EL) display. Speaker 60 converts sound information relating to driver assistance into sound to propagate to passengers on the vehicle. METER 40 is a display unit for displaying warning information relative to such factors as temperature and oil level. METER 40 is placed on a front panel of a vehicle at a position the driver may see easily during driving the vehicle, a better position than navigation unit 30.

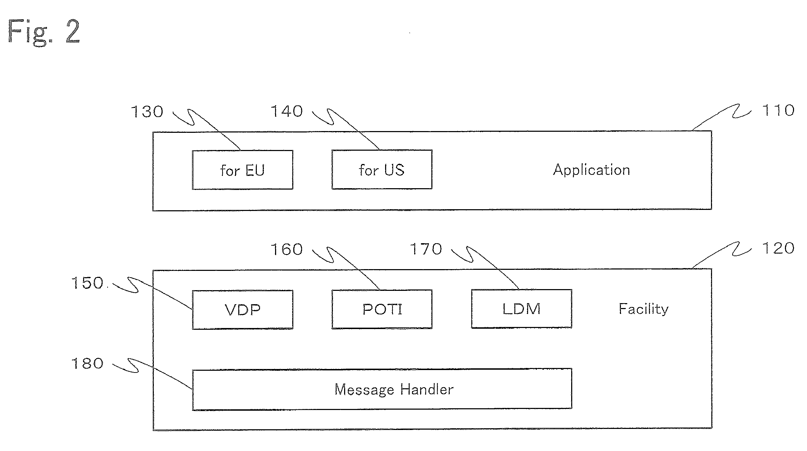

Software included in ITS processing unit 10 will be now described. Fig. 2 is a block diagram illustrating software architecture of ITS processing unit 10, which include software belonging to application 110 and software belonging to facility 120.

Application 110 includes respective units of application-for-EU 130 and application-for-US 140. Application-for-EU 130 comprises software application for performing processes relating to CAM and DENM. Application-for-US 140 comprises software application for performing processes relating to BSM.

Application 110 thus includes application-for-EU 130 and application-for-US 140, and thus can cope with either one of CAM, DENM, and BSM. When application-for-US 140 is being executed, application-for-EU 130 may concurrently be executed.

Facility 120 comprises VDP (Vehicle Data Provider) 150, POTI (Position and Time) 160, LDM (Local Dynamic Map) 170, and message handler 180. VDP 150 receives vehicle data such as vehicle speed and steering angle via F-CAN and B-CAN or other means, and provides relevant data to relevant components. POTI 160 receives positional information such as a current position of the vehicle and a current time from GPS. LDM 170 has a function of a data storage for storing communication data.

Message handler 180 has a function of converting events, and converting between CAM/DENM and BSM. Message handler 180 absorbs differences of transmission data formats and transmission schemes and enables application 110 to use them without considering the differences. That is, message handler 180 makes the driver assistance system globally common.

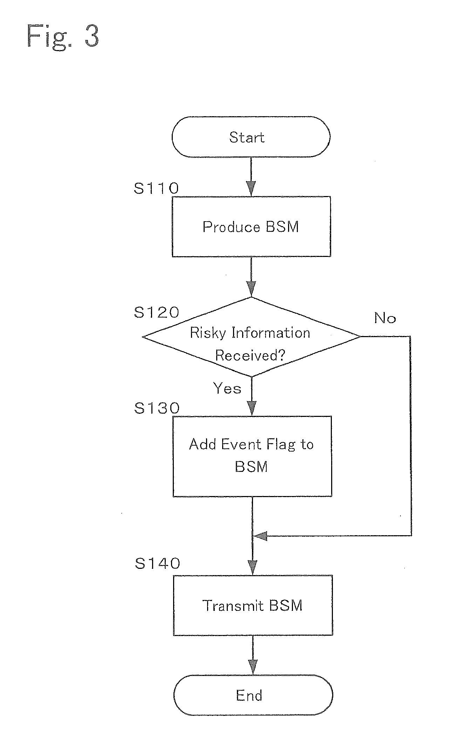

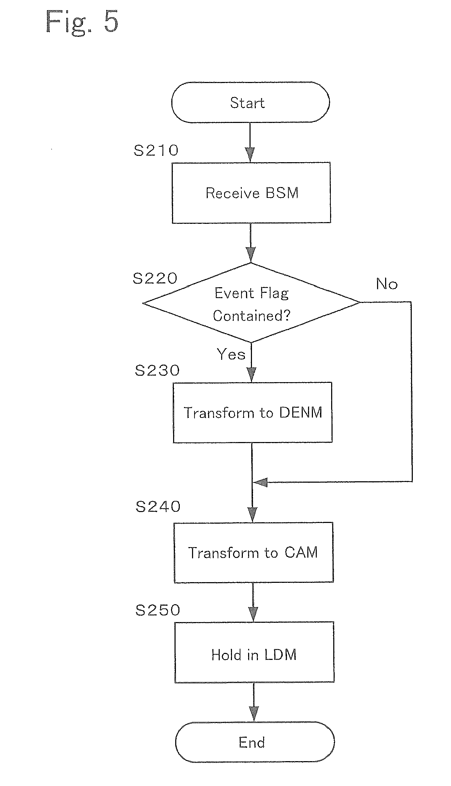

Event conversion function of message handler 180 includes conversion function for event transmission and conversion function for event reception. For example, when DENM is received from application-for-EU 130, conversion function for event transmission adds one or more event flags that are optional according to present BSM standards and converts DENM into event information for BSM transmission (Fig. 3). Event reception function converts BSM accompanying attached one or more event flags into CAM/DENM for transfer to LDM 170 for data storage (Fig. 5).

As a first example, with an assumption that ITS processing unit 10 executes application 110 using EU communication data, description will be made for the transmission and reception under BSM environment in the US will be described.

Fig. 3 is a flow chart showing operational steps of transmission side of ITS processing unit 10. For transmission, intrinsic information for BSM, event information and event flag(s) are produced.

In step S110, BSM is produced in accordance with vehicle data received from VDP 150 including vehicle speed and turn signal as well as positional information received from POSI 160. This BSM is an intrinsic BSM as defined in the standards. ITS processing unit 10 also receives detected information relating to dangerous events such as harsh braking and irregular behavior of the vehicle that should be made known to the surroundings. Application-for-EU 130 may receive DENM for transmission of information on dangerous events. The process now moves to step S120.

In S120, determination is made as to whether or not information on dangerous events has been received. If positive, process moves to step S130, and if negative, process moves to step S140. In step S130, message handler 180 attaches an event flag to BSM. A table showing correspondence between event flags and DENM is provided, with reference to which event flags are attached. Message handler 180 converts the information on dangerous events into event information, which is to be contained in BSM. Process now moves to step S140.

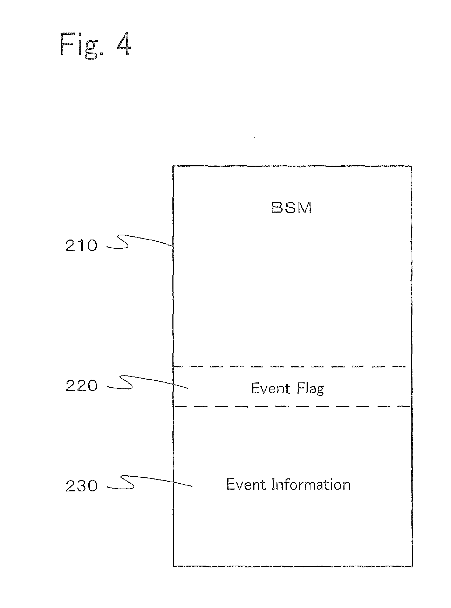

In step S140, BSM transmission is performed. Fig. 4 illustrates a structure of data fields used in BSM transmission by a driver assistance apparatus according to one embodiment of the present invention. The data fields used for communication includes event flag field 220 and event information field 230 in an overall BSM data field 210.

Event flag data field 220 is an arbitrary region in BSM standards, and event information field 230 is an unassigned region in BSM standards. In BSM data field 210, the data fields other than event flag field 220 and event information data field 230 are data fields intrinsic to BSM for which communication contents are defined in the BSM standards. BSM transmission is made by accommodating intrinsic BSM, event flags, and event information in respectively assigned fields. Event information and event flags are transmitted when they are provided in the above mentioned process.

Fig. 5 is a flow chart showing process steps in the receiving side of ITS processing unit 10. ITS processing unit may handle CAM, DENM, and BSM by application-for-EU 130 and application-for-US 140. Note that in the present example, as described above, ITS processing unit 10 executes application 110 using EU communication data for transmission in BSM environment in the US. In the receiving side, event information contained in the received BSM is retrieved and transformed into DENM.

BSM is received in step S210. The intrinsic BSM, event flags and event information may be received. The process now moves to step S220, where existence of the event flags is checked. This step is performed when application 110 uses application-for-US 140 to determine if application-for-US 140 may handle the received data format. When event flag field 220 of the received BSM includes a flag, the process moves to step S230. When there is no such event flag, the process moves to step S240.

In step S230, message handler 180 converts the received event information into corresponding DENM with reference to the table showing correspondence between event flags and DENM so that application 110 may operate.

Step S240 is performed in a case where application-for-US 140 does not correspond. Message handler 180 transforms the received BSM into CAM. As application 110 is provided with application-for-EU 130, application 110 may process the transformed CAM. The process moves to step S250.

In step 250, message handler 180 stores CAM and DENM in LDM 170. In this manner, may acquire either one of CAM and DENM when application 110 may handle CAM and DENM

Now, as a second example, with an assumption that ITS processing unit 10 executes application 110 using US communication data, description will be made for a case where BSM data is transmitted using CAM of the EU scheme. The BSM standard does not include information corresponding to hazard information or harsh braking information to be communicated in DENM. Therefore, ITS processing unit 10 in the transmission side produces CAM containing the contents of the BSM for transmission, and ITS processing unit 10 in the receiving side transforms the received CAM back into the BSM.

In the transmission side, ITS processing unit 10 receives, from VDP 150, vehicle data such as vehicle speed and turn signals, and, from POSI 160, positional information, and produces CAM for transmission.

Further, ITS processing unit 10 receives information on detected dangerous events that should be notified to the surroundings, and produces DENM for transmission. ITS processing unit 10 transmits DENM thus produced and CAM thus produced.

In the receiving side, ITS processing unit 10 receives CAM and transforms it back into BSM, which is stored in LDM 170. Since application 110 complies with the BSM, ITS processing unit 10 converts the received DENM into event information for application 110 to handle.

ITS processing unit 10 may decide, in accordance with the current location of the vehicle, which one of BSM communication and CAM communication should be used. Application 110 acquires the current location of the vehicle from POTI 160 and determines which region the current location belongs to, a region where BSM communication of the US regional scheme is used, or a region where CAM communication and/or DENM communication of the EU regional scheme is used. If it is the region where the BSM communication of the US regional scheme is used, application 110 selects BSM communication. If it is the region where CAM and/or DENM communication of the EU regional scheme is used, application 110 selects CAM and/or DENM communication.

For transmission, this process is performed before the process illustrated in Fig. 3. For reception, this process is performed before the process illustrated in Fig. 5. Such decision based on the current location is done when the vehicle is started and is stored in LDM 170 so that either of the regional communication schemes may be selected using the data stored in LDM 170.

ITS processing unit 10 may decide whether to use BSM communication or to use CAM communication in accordance with the ratio of the schemes used in the received data in lieu of the current location of the vehicle. Received data is checked to determine which communication scheme is used in the received data, BSM or CAM and/or DENM. The result is stored in LDM 170.

Application 110 refers to LDM 170 and, if the count for BSM is larger than the count for CAM or DENM, selects BSM of the US regional scheme for use in transmission. On the other hand, if the count for CAM or DENM is larger than the count for BSM, application 110 selects CAM or DENM of the EU regional scheme for transmission.

As described above, in accordance with one embodiment of the present invention, ITS processing unit 10 receives data of at least one of the US regional scheme and the EU regional scheme, determines if application to be performed complies with the scheme of the received data, if the determination is negative, converts the received data so that the application complies with the data, and the application is performed.

ITS processing unit 10 in one embodiment of the present invention is provided with application that is capable of transmitting either one of data of the US regional scheme and data of the EU regional scheme, produces at least one of data of the US regional scheme and data of the EU regional scheme for transmission.

According to the present invention, differences in the message formats of the US scheme and the EU scheme are absorbed. For example, so as to comply with BSM in which occurred events are stored in the respective fields of event flag and event information, an embodiment of the present invention is provided with a function for conversion into DENM. By absorbing the differences between DENM and BSM, a same platform may be used. That is, a common platform may be used for a vehicle that runs in the US region and the EU region.

The present invention is not intended to be limited to the embodiment described above. Various improvements and modifications may be made without departing the scope of the present invention.

A common driver assistance apparatus is provided that is capable of processing communications contents of various inter-car communications and road-car communications in various regions. The driver assistance apparatus receives data of a first regional scheme or of a second regional scheme, determines if an application to be executed fits the scheme of the received data, and transform the data if the determination is negative so that the application fits. The first regional scheme may be American scheme and the second regional scheme may be European scheme.

## Claims

1. A driver assistance apparatus to be mounted on a vehicle for assisting driving of the vehicle, said apparatus being **characterized in that** the apparatus is capable of receiving data in a first regional scheme and data in a second regional scheme, and determines if an application to be executed complies with the regional scheme of the received data, if the determination is negative, the apparatus converts the received data into data that complies with the application to be executed, and the apparatus execute the application.

2. The driver assistance apparatus of claim 1, wherein the first regional scheme is American scheme and the second regional scheme is European scheme, and wherein, when data comprising BSM based on the American scheme attached with event information is received while the application to be executed is provided to comply with data of the European scheme, said processor converts DENM into event information before executing the application.

3. The driver assistance apparatus of claim 1, wherein the first regional scheme is American scheme and the second regional scheme is European scheme, and wherein, when DENM based on the European scheme is received while the application to be executed is provided to comply with data of the American scheme, said processor converts DENM into event information before executing the application.

4. Method to be performed by a driver assistance apparatus, **characterized in that** the apparatus is capable of transmitting either one of data according to a first regional scheme and data according to a second regional scheme, the method being **characterized in that** the apparatus produces at least one of data according to the first regional scheme and data according to the second regional scheme, and transmits the produced data.

5. A computer program to be executed by a computer provided in a driver assistance apparatus, said program when run on a computer performs the steps of
making the computer capable of transmitting either of data of a first regional scheme and data of a second regional scheme;
producing at least one of data according to the first regional scheme and data according to the second regional scheme; and
transmitting the produced data.
